# EUROPEAN PATENT APPLICATION

(11) **EP 4 177 629 A1**
(43) Date of publication of application: **10.05.2023**
(21) Application number: 22205148.4
(22) Date of filing: 02.11.2022
(51) Int. Cl.: G01S 7/40, G01S 7/497, G01S 13/86, G01S 13/931, G01S 17/86, G01S 17/931

(54) **SYSTEM AND METHOD FOR JOINT CALIBRATION OF SENSORS, VEHICLE AND STORAGE MEDIUM**

(30) Priority: 03.11.2021 CN 202111292790
(71) Applicant: Nio Technology (Anhui) Co., Ltd, Hefei City, Anhui 230601 (CN)
(72) Inventor: YANG, Tuoyu, Hefei City, Anhui, 230601 (CN); MA, Xiao, Hefei City, Anhui, 230601 (CN); DONG, Xiaojian, Hefei City, Anhui, 230601 (CN); SHEN, Tianyi, Hefei City, Anhui, 230601 (CN); CHEN, Jiong, Hefei City, Anhui, 230601 (CN)
(74) Representative: Vossius & Partner Patentanwälte Rechtsanwälte mbB

(57) **Abstract**

The disclosure relates to a system and method for joint calibration of sensors, a vehicle, and a storage medium. The method for joint calibration of sensors includes the following steps: guiding a vehicle to a predetermined position; positioning at least two types of targets relative to the predetermined position; and measuring the at least two types of targets by using sensors in the vehicle that correspond to the at least two types of targets to jointly calibrate the sensors. According to the method for joint calibration of sensors, efficient and accurate joint calibration of the sensors in the vehicle may be implemented.

## Description

### CROSS-REFERENCE TO RELATED APPLICATIONS

This application claims priority to Chinese Patent Application NO. CN202111292790.1, titled "SYSTEM AND METHOD FOR JOINT CALIBRATION OF SENSORS, VEHICLE AND STORAGE MEDIUM", filed Nov. the 3rd, 2021, the entire contents of which are incorporated herein by reference.

### Technical Field

The disclosure relates to the field of calibration of sensors in vehicles, and specifically to a system and method for joint calibration of sensors, a vehicle, and a storage medium.

### Background Art

Autonomous vehicles may be configured with a variety of sensors, such as cameras, millimeter-wave radars, laser radars, etc. When tasks such as environmental perception, fusion, etc. are performed by using these sensors, relative positions of the sensors and positions of the sensors relative to a vehicle need to be first determined. In the prior art, calibration results are generally generated for a single sensor, and accuracy requirements are not high, which are mainly due to at least one of the following considerations: calibration scenarios are mainly focused on simple conditions and high-speed conditions, and there are rare urban conditions and conditions with short-range targets; calibration results of a single sensor are mainly used; and target-level fusion is mainly adopted for calibration fusion.

### Summary of the disclosure

Embodiments of the disclosure provide a system and method for joint calibration of sensors, a vehicle, and a storage medium, to perform efficient and accurate joint calibration on the sensors in the vehicle.

According to an aspect of the disclosure, a system for joint calibration of sensors is provided, including: a vehicle positioning unit configured to guide a vehicle to a predetermined position; and a target unit including at least two types of targets positioned relative to the predetermined position and configured for joint calibration of sensors in the vehicle.

In some embodiments of the disclosure, optionally, the vehicle positioning unit includes at least one of the following: a four-wheel positioning apparatus, a V-groove positioning apparatus, a limit guide rod positioning apparatus, and a laser radar positioning apparatus.

In some embodiments of the disclosure, optionally, the at least two types of targets include at least two of the following: at least a first target configured for calibration of a millimeter-wave radar, at least a second target configured for calibration of a laser radar, and at least a third target configured for calibration of an image acquisition apparatus.

In some embodiments of the disclosure, optionally, the at least two types of targets are display targets capable of displaying variable patterns and/or fixed-style targets.

In some embodiments of the disclosure, optionally, any one of first targets is located on a bisector of a field of view of the millimeter-wave radar of the vehicle, and any one of second targets is located on a bisector of a field of view of the laser radar of the vehicle.

In some embodiments of the disclosure, optionally, any one of third targets is located in the center of a field of view of the image acquisition apparatus of the vehicle or an overlapping area of field of views of the image acquisition apparatus of the vehicle.

In some embodiments of the disclosure, optionally, the system further includes a calibration unit configured to: determine positions of the at least two types of targets in a vehicle coordinate system based on positions of the at least two types of targets and the vehicle in a global coordinate system; and determine positions of the sensors in the vehicle coordinate system based on measurement results of the sensors on the at least two types of targets.

According to another aspect of the disclosure, a method for joint calibration of sensors is provided, including: guiding a vehicle to a predetermined position; positioning at least two types of targets relative to the predetermined position; and measuring the at least two types of targets by using sensors in the vehicle to jointly calibrate the sensors.

In some embodiments of the disclosure, optionally, guiding the vehicle to a predetermined position by at least one of the following: a four-wheel positioning apparatus, a V-groove positioning apparatus, a limit guide rod positioning apparatus, and a laser radar positioning apparatus.

In some embodiments of the disclosure, optionally, the at least two types of targets include at least two of the following: at least a first target configured for calibration of a millimeter-wave radar, at least a second target configured for calibration of a laser radar, and at least a third target configured for calibration of an image acquisition apparatus.

In some embodiments of the disclosure, optionally, the at least two types of targets are display targets capable of displaying variable patterns and/or fixed-style targets.

In some embodiments of the disclosure, optionally, any one of first targets is located on a bisector of a field of view of the millimeter-wave radar of the vehicle, and any one of second targets is located on a bisector of a field of view of the laser radar of the vehicle.

In some embodiments of the disclosure, optionally, any one of third targets is located in the center of a field of view of the image acquisition apparatus of the vehicle or an overlapping area of field of views of the image acquisition apparatus of the vehicle.

In some embodiments of the disclosure, optionally, calibrating the sensors includes: determining positions of the at least two types of targets in a vehicle coordinate system based on positions of the at least two types of targets and the vehicle in a global coordinate system; and determining positions of the sensors in the vehicle coordinate system based on measurement results of the sensors on the at least two types of targets.

According to another aspect of the disclosure, a vehicle is provided, including at least two types of sensors calibrated by any one of the systems for joint calibration of sensors as described above or by using any one of the methods for joint calibration of sensors as described above.

According to another aspect of the disclosure, there is provided a non-transitory computer-readable medium having instructions stored therein, where the instructions, when executed by a processor, cause the processor to perform any one of the methods for joint calibration of sensors as described above.

### Brief Description of the Drawings

The above and other objectives and advantages of the disclosure will be more thorough and clearer from the following detailed description in conjunction with the accompanying drawings, where the same or similar elements are represented by the same reference numerals.
FIG. 1 shows a system for joint calibration of sensors according to an embodiment of the disclosure;
FIG. 2 shows a method for joint calibration of sensors according to an embodiment of the disclosure; and
FIG. 3 shows a target arrangement solution according to an embodiment of the disclosure.

### Detailed Description of Embodiments

For the sake of brevity and illustrative purposes, the principles of the disclosure are mainly described herein with reference to exemplary embodiments thereof. However, those skilled in the art will easily appreciate that the same principle may be equivalently applied to all types of systems and methods for joint calibration of sensors, vehicles, and storage media, in which the same or similar principle may be implemented. Any such variations do not depart from the true spirit and scope of the disclosure.

With the improvement of sensor performance, the rise of a technical route of a perception algorithm such as pixel-level fusion, the generation of requirements for training a visual image with laser radar data as a truth value to obtain a depth map, etc., higher requirements are put forward for the accuracy of joint calibration of multiple sensors in autonomous driving, and therefore a more systematic method is also needed.

In the past, for mass-produced passenger cars, the initial accuracy of sensors is generally ensured by the fixed accuracy of installation positions, and a single sensor is calibrated to a certain extent by using a target. However, for high-precision joint calibration of multiple sensors, in addition to ensuring the calibration accuracy, requirements for sites, production takts, costs, operability, etc. also need to be taken into account. In view of this, a solution for joint calibration of multiple sensors will be introduced herein.

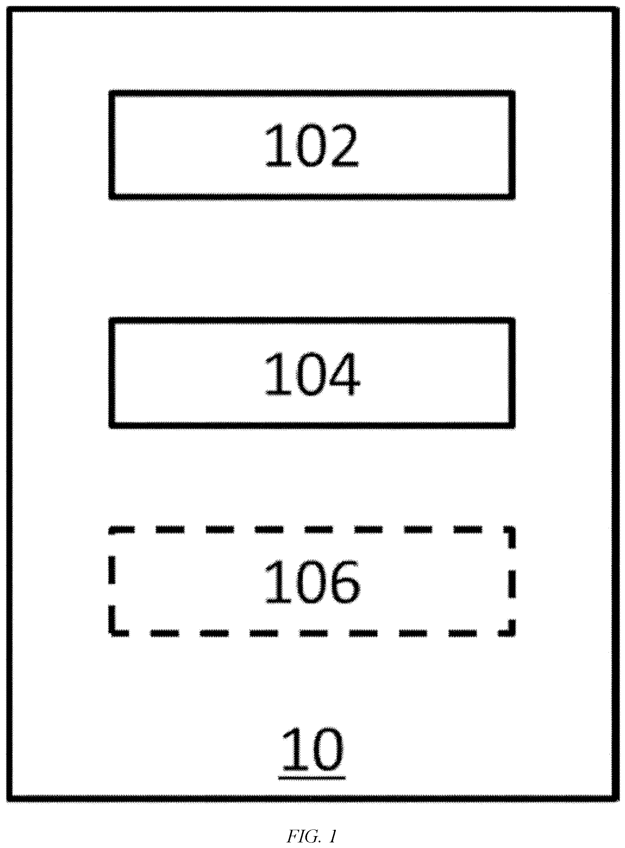

According to an aspect of the disclosure, a system for joint calibration of sensors is provided. As shown in FIG. 1, a system 10 for joint calibration of sensors includes a vehicle positioning unit 102 and a target unit 104. The system 10 for joint calibration of sensors may be arranged in a calibration place according to actual conditions. If feasible, the calibration place should be relatively open to facilitate calibration of the sensors in a vehicle.

The vehicle positioning unit 102 is configured to guide the vehicle to a predetermined position. The predetermined position may be, for example, the center of the calibration place, and the predetermined position will be fixed relative to a geodetic coordinate system (a space rectangular coordinate system with a specific point on the ground as the origin, for example, with the center of the rectangular calibration place as the origin). During actual calibration, each mass-produced vehicle may need to be guided to the predetermined position. Therefore, specific requirements need to be met to implement accurate calibration. For example, the positioning accuracy of automatically moving the vehicles to the same repetitive central position needs to be within ± 5 mm; the positioning accuracy of automatically moving the vehicles to the same repetitive horizontal position needs to be within ± 5 mm; the positioning accuracy of automatically moving the vehicles to the same repetitive height position needs to be within ± 5 mm; the positioning accuracy of automatically moving the vehicles to the same repetitive pitch angle needs to be within ± 0.2°; and the positioning accuracy of automatically moving the vehicles to the same repetitive roll angle needs to be within ± 0.2°.

In some embodiments of the disclosure, the vehicle positioning unit 102 may be a four-wheel positioning apparatus, a V-groove positioning apparatus, a limit guide rod positioning apparatus, a laser radar positioning apparatus, etc. For example, when it is determined to perform calibration, the vehicle may be accurately and absolutely positioned by means of four-wheel positioning. It is also possible to passively position the vehicle with coarse precision by means of a V-groove, a limit guide rod, etc. first and then obtain an absolute position of the vehicle by using a positioning apparatus such as a field-end laser radar. A result of the above absolute positioning is the absolute position, which is also referred to as the predetermined position herein.

The target unit 104 may include a plurality of targets, and these targets may include at least two types. For example, the target unit 104 may include at least a target (or referred to as first target) configured for calibration of a millimeter-wave radar, at least a target (or referred to as second target) configured for calibration of a laser radar, at least a target (or referred to as third target) configured for calibration of an image acquisition apparatus, etc. These targets are positioned relative to the predetermined position and configured for joint calibration of sensors in the vehicle that correspond to the at least two types of targets.

The at least a target configured for calibration of a specific sensor herein refers to that the primary consideration for arrangement of such targets is accurate calibration of such sensors. Therefore, such targets will at least be captured by such sensors. In addition, such targets may also be captured by other types of sensors for joint calibration.

In some embodiments of the disclosure, the at least two types of targets are display targets capable of displaying variable patterns and/or fixed-style targets. For example, fixed calibration plates or variable patterns displayed on a screen may be used as target images for calibration of cameras. The patterns may be selected from visual fiducial marks such as AprilTag, checkerboards, etc.

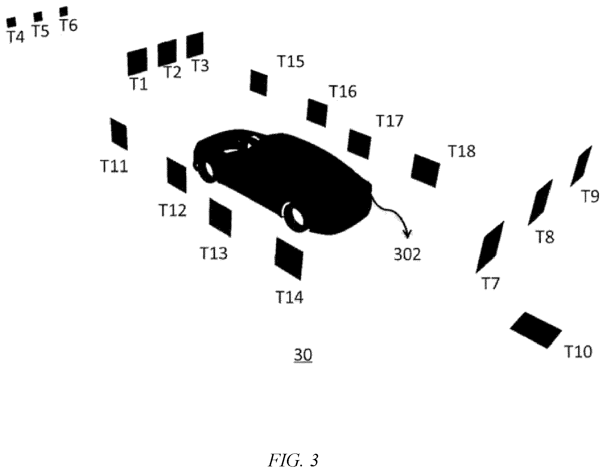

FIG. 3 shows a target arrangement solution. Targets T1 to T18 are arranged in a system 30 for joint calibration of sensors. The target T10 is the fixed-style ground target made of a steel plate, may has a size of 1 m × 1 m, and is illuminated by light in the calibration place. The remaining targets are the display targets, and may have a display size of 32 inches and can support a maximum brightness of 500 cd/m².

Each target in FIG. 3 has its specific arrangement specifications. The arrangement specifications may include a horizontal spacing between the targets, a horizontal distance from a central axis of the vehicle to the center of the target, a longitudinal distance from the target to a ground plane of the vehicle, a horizontal distance from a front axle of the vehicle to the center of the target (with a vehicle head direction as a positive direction and a vehicle tail direction as a negative direction), an angle between the target and a horizontal plane, and tolerances thereof. These arrangement specifications may be determined based on the positions of the sensors in the vehicle and the characteristics of a vehicle model.

For example, the targets T1 to T3 may follow the same arrangement specifications, where a horizontal spacing between the targets is 1,100 mm (measured from the center of the target, and a tolerance thereof is 5 mm), a horizontal distance from the central axis of the vehicle to the center of the target is 1,100 mm (measured from the center of the target, and a tolerance thereof is 5 mm), a longitudinal distance from the target to the ground plane of the vehicle is 2,500 mm (measured from the center of the target, and a tolerance thereof is 5 mm), a horizontal distance from the front axle of the vehicle to the center of the target is 3,000 mm (measured along the central axis of the vehicle from the center of the target, and a tolerance thereof is 5 mm), and an angle between the target and the horizontal plane is 60° (a tolerance thereof is 0.2°).

The targets T4 to T6 may follow the same arrangement specifications, where a horizontal spacing between the targets is 1,800 mm (measured from the center of the target, and a tolerance thereof is 5 mm), a horizontal distance from the central axis of the vehicle to the center of the target is 1,800 mm (measured from the center of the target, and a tolerance thereof is 5 mm), a longitudinal distance from the target to the ground plane of the vehicle is 2,300 mm (measured from the center of the target, and a tolerance thereof is 5 mm), a horizontal distance from the front axle of the vehicle to the center of the target is 11,500 mm (measured along the central axis of the vehicle from the center of the target, and a tolerance thereof is 5 mm), and an angle between the target and the horizontal plane is 90° (a tolerance thereof is 0.2°).

The targets T7 to T9 may follow the same arrangement specifications, where a horizontal spacing between the targets is 1,600 mm (measured from the center of the target, and a tolerance thereof is 5 mm), a horizontal distance from the central axis of the vehicle to the center of the target is 1,600 mm (measured from the center of the target, and a tolerance thereof is 5 mm), a longitudinal distance from the target to the ground plane of the vehicle is 2,650 mm (measured from the center of the target, and a tolerance thereof is 5 mm), a horizontal distance from the front axle of the vehicle to the center of the target is -75,250 mm (measured along the central axis of the vehicle from the center of the target, and a tolerance thereof is 5 mm), and an angle between the target and the horizontal plane is 90° (a tolerance thereof is 0.2°).

The target T10 has the following arrangement specifications: a longitudinal distance from the target to the ground plane of the vehicle is 5 mm (measured from the center of the target, and a tolerance thereof is 5 mm), a horizontal distance from the front axle of the vehicle to the center of the target is -8,000 mm (measured along the central axis of the vehicle from the center of the target, and a tolerance thereof is 5 mm), and an angle between the target and the horizontal plane is 0° (a tolerance thereof is 0.2°).

The targets T11 and T15 may follow the same arrangement specifications, where a horizontal spacing between the targets is 5,450 mm (measured from the center of the target, and a tolerance thereof is 5 mm), a horizontal distance from the central axis of the vehicle to the center of the target is 2,745 mm (measured from the center of the target, and a tolerance thereof is 5 mm), a longitudinal distance from the target to the ground plane of the vehicle is 1,500 mm (measured from the center of the target, and a tolerance thereof is 5 mm), a horizontal distance from the front axle of the vehicle to the center of the target is 2,100 mm (measured along the central axis of the vehicle from the center of the target, and a tolerance thereof is 5 mm), and an angle between the target and the horizontal plane is 90° (a tolerance thereof is 0.2°).

The targets T12 to T16 may follow the same arrangement specifications, where a horizontal spacing between the targets is 5,450 mm (measured from the center of the target, and a tolerance thereof is 5 mm), a horizontal distance from the central axis of the vehicle to the center of the target is 2,745 mm (measured from the center of the target, and a tolerance thereof is 5 mm), a longitudinal distance from the target to the ground plane of the vehicle is 1,250 mm (measured from the center of the target, and a tolerance thereof is 5 mm), a horizontal distance from the front axle of the vehicle to the center of the target is -500 mm (measured along the central axis of the vehicle from the center of the target, and a tolerance thereof is 5 mm), and an angle between the target and the horizontal plane is 90° (a tolerance thereof is 0.2°).

The targets T13 and T17 may follow the same arrangement specifications, where a horizontal spacing between the targets is 5,450 mm (measured from the center of the target, and a tolerance thereof is 5 mm), a horizontal distance from the central axis of the vehicle to the center of the target is 2,745 mm (measured from the center of the target, and a tolerance thereof is 5 mm), a longitudinal distance from the target to the ground plane of the vehicle is 800 mm (measured from the center of the target, and a tolerance thereof is 5 mm), a horizontal distance from the front axle of the vehicle to the center of the target is -2,000 mm (measured along the central axis of the vehicle from the center of the target, and a tolerance thereof is 5 mm), and an angle between the target and the horizontal plane is 90° (a tolerance thereof is 0.2°).

The targets T14 and T18 may follow the same arrangement specifications, where a horizontal spacing between the targets is 5,450 mm (measured from the center of the target, and a tolerance thereof is 5 mm), a horizontal distance from the central axis of the vehicle to the center of the target is 2,725 mm (measured from the center of the target, and a tolerance thereof is 5 mm), a longitudinal distance from the target to the ground plane of the vehicle is 800 mm (measured from the center of the target, and a tolerance thereof is 5 mm), a horizontal distance from the front axle of the vehicle to the center of the target is -3,600 mm (measured along the central axis of the vehicle from the center of the target, and a tolerance thereof is 5 mm), and an angle between the target and the horizontal plane is 90° (a tolerance thereof is 0.2°).

In some embodiments of the disclosure, any one of first targets is located on a bisector of a field of view of the millimeter-wave radar of the vehicle. In addition, any one of second targets is located on a bisector of a field of view of the laser radar of the vehicle. For example, within the range of the calibration place, the target of the millimeter-wave radar may be arranged at a position as far as possible from the center of the field of view of the millimeter-wave radar within the range of the field of view, and the target of the laser radar may be arranged at a position as close as possible to the center of the field of view of the laser radar within the range of the field of view. A specific arrangement solution may be designed according to calibration requirements of the millimeter-wave radar and the laser radar, place restrictions, etc. Such arrangement may facilitate calibration of the millimeter-wave radar and the laser radar, thereby improving the calibration accuracy.

In some embodiments of the disclosure, any one of third targets is located in the center of a field of view of the image acquisition apparatus of the vehicle or an overlapping area of field of views of the image acquisition apparatus of the vehicle. For example, the target may be arranged in the overlapping area of the field of views of two cameras based on arrangement positions of the cameras and the field of views thereof. In addition, the target may also be arranged at positions such as in the center of the field of view, on the edge, etc. of the camera, so as to ensure that there are at least two targets in the field of view of each camera. It is better to arrange one target in the overlapping area of the field of views of every two cameras. Such arrangement may improve the calibration accuracy of the image acquisition apparatus.

In some embodiments of the disclosure, the system 10 for joint calibration of sensors further includes a calibration unit 106. The calibration unit 106 may determine positions of the at least two types of targets in a vehicle coordinate system based on positions of the at least two types of targets and the vehicle in a global coordinate system; and determine positions of the sensors in the vehicle coordinate system based on measurement results of the sensors on the at least two types of targets. For example, during actual calibration, self-positioning of the vehicle is first implemented by using the vehicle positioning unit 102, and the coordinate system (the vehicle coordinate system) with the center of the front axle of the vehicle as the origin of coordinates may be established. The vehicle positioning has been completed, that is, the absolute position of the vehicle in the geodetic coordinate system has been obtained. Since the positions of the targets in the same geodetic coordinate system are also known, a positional relationship between the targets in the vehicle coordinate system may be determined. Then, different calibration methods may be adopted according to the characteristics of the sensors. For example, a self-calibration method may be adopted for the millimeter-wave radar and the laser radar, and the positions of the millimeter-wave radar and the laser radar in the vehicle coordinate system may be known based on the positions of the targets measured by the millimeter-wave radar and the laser radar. For the cameras, the positions of the targets may be visually detected, and the positions thereof in the vehicle coordinate system are obtained by estimating six degrees of freedom (6DoF) using a perspective-n-point (PnP) algorithm or other algorithms, thereby completing the calibration.

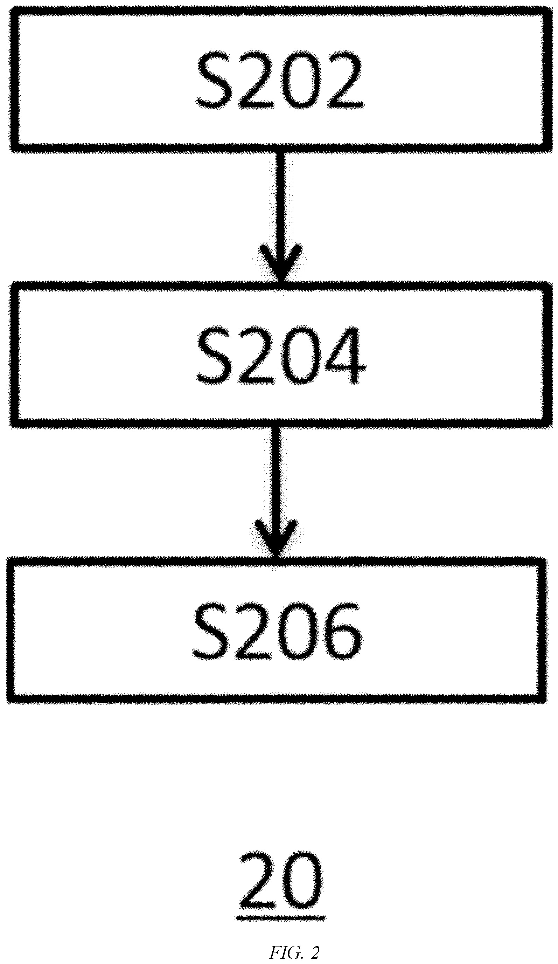

According to another aspect of the disclosure, a method for joint calibration of sensors is provided. As shown in FIG. 2, a method 20 for joint calibration of sensors includes the following steps: step S202: guiding a vehicle to a predetermined position; step S204: positioning at least two types of targets relative to the predetermined position; and step S206: measuring the at least two types of targets by using sensors in the vehicle to jointly calibrate the sensors.

According to the method 20 for joint calibration of sensors, the vehicle is guided to the predetermined position in step S202. The predetermined position may be, for example, the center of the calibration place, and the predetermined position will be fixed relative to a geodetic coordinate system (a space rectangular coordinate system with a specific point on the ground as the origin, for example, with the center of the rectangular calibration place as the origin). During actual calibration, each mass-produced vehicle may need to be guided to the predetermined position. Therefore, specific requirements need to be met to implement accurate calibration. For example, the positioning accuracy of automatically moving the vehicles to the same repetitive central position needs to be within ± 5 mm; the positioning accuracy of automatically moving the vehicles to the same repetitive horizontal position needs to be within ± 5 mm; the positioning accuracy of automatically moving the vehicles to the same repetitive height position needs to be within ± 5 mm; the positioning accuracy of automatically moving the vehicles to the same repetitive pitch angle needs to be within ± 0.2°; and the positioning accuracy of automatically moving the vehicles to the same repetitive roll angle needs to be within ± 0.2°.

In some embodiments of the disclosure, the vehicle may be guided to the predetermined position by using a four-wheel positioning apparatus, a V-groove positioning apparatus, a limit guide rod positioning apparatus, a laser radar positioning apparatus, etc. in step S202. For example, when it is determined to perform calibration, the vehicle may be accurately and absolutely positioned by means of four-wheel positioning. It is also possible to passively position the vehicle with coarse precision by means of a V-groove, a limit guide rod, etc. first and then obtain an absolute position of the vehicle by using a positioning apparatus such as a field-end laser radar. A result of the above absolute positioning is the absolute position, which is also referred to as the predetermined position herein.

According to the method 20 for joint calibration of sensors, the at least two types of targets are positioned relative to the predetermined position in step S204. In this step, positioning of the targets relative to the geodetic coordinate system is implemented. In some examples, the targets may include at least a target (or referred to as first target) configured for calibration of a millimeter-wave radar, at least a target (or referred to as second target) configured for calibration of a laser radar, at least a target (or referred to as third target) configured for calibration of an image acquisition apparatus, etc. These targets are positioned relative to the predetermined position and configured for joint calibration of sensors in the vehicle that correspond to the at least two types of targets.

The at least a target configured for calibration of a specific sensor herein refers to that the primary consideration for arrangement of such targets is accurate calibration of such sensors. Therefore, such targets will at least be captured by such sensors. In addition, such targets may also be captured by other types of sensors for joint calibration.

In some embodiments of the disclosure, the at least two types of targets are display targets capable of displaying variable patterns and/or fixed-style targets. For example, fixed calibration plates or variable patterns displayed on a screen may be used as target images for calibration of cameras. The patterns may be selected from visual fiducial marks such as AprilTag, checkerboards, etc.

FIG. 3 shows a target arrangement solution. Targets T1 to T18 are arranged in a system 30 for joint calibration of sensors. The target T10 is the fixed-style ground target made of a steel plate, may has a size of 1 m × 1 m, and is illuminated by light in the calibration place. The remaining targets are the display targets, and may have a display size of 32 inches and can support a maximum brightness of 500 cd/m².

Each target in FIG. 3 has its specific arrangement specifications. The arrangement specifications may include a horizontal spacing between the targets, a horizontal distance from a central axis of the vehicle to the center of the target, a longitudinal distance from the target to a ground plane of the vehicle, a horizontal distance from a front axle of the vehicle to the center of the target (with a vehicle head direction as a positive direction and a vehicle tail direction as a negative direction), an angle between the target and a horizontal plane, and tolerances thereof.

For example, the targets T1 to T3 may follow the same arrangement specifications, where a horizontal spacing between the targets is 1,100 mm (measured from the center of the target, and a tolerance thereof is 5 mm), a horizontal distance from the central axis of the vehicle to the center of the target is 1,100 mm (measured from the center of the target, and a tolerance thereof is 5 mm), a longitudinal distance from the target to the ground plane of the vehicle is 2,500 mm (measured from the center of the target, and a tolerance thereof is 5 mm), a horizontal distance from the front axle of the vehicle to the center of the target is 3,000 mm (measured along the central axis of the vehicle from the center of the target, and a tolerance thereof is 5 mm), and an angle between the target and the horizontal plane is 60° (a tolerance thereof is 0.2°).

The targets T4 to T6 may follow the same arrangement specifications, where a horizontal spacing between the targets is 1,800 mm (measured from the center of the target, and a tolerance thereof is 5 mm), a horizontal distance from the central axis of the vehicle to the center of the target is 1,800 mm (measured from the center of the target, and a tolerance thereof is 5 mm), a longitudinal distance from the target to the ground plane of the vehicle is 2,300 mm (measured from the center of the target, and a tolerance thereof is 5 mm), a horizontal distance from the front axle of the vehicle to the center of the target is 11,500 mm (measured along the central axis of the vehicle from the center of the target, and a tolerance thereof is 5 mm), and an angle between the target and the horizontal plane is 90° (a tolerance thereof is 0.2°).

The targets T7 to T9 may follow the same arrangement specifications, where a horizontal spacing between the targets is 1,600 mm (measured from the center of the target, and a tolerance thereof is 5 mm), a horizontal distance from the central axis of the vehicle to the center of the target is 1,600 mm (measured from the center of the target, and a tolerance thereof is 5 mm), a longitudinal distance from the target to the ground plane of the vehicle is 2,650 mm (measured from the center of the target, and a tolerance thereof is 5 mm), a horizontal distance from the front axle of the vehicle to the center of the target is -75,250 mm (measured along the central axis of the vehicle from the center of the target, and a tolerance thereof is 5 mm), and an angle between the target and the horizontal plane is 90° (a tolerance thereof is 0.2°).

The target T10 has the following arrangement specifications: a longitudinal distance from the target to the ground plane of the vehicle is 5 mm (measured from the center of the target, and a tolerance thereof is 5 mm), a horizontal distance from the front axle of the vehicle to the center of the target is -8,000 mm (measured along the central axis of the vehicle from the center of the target, and a tolerance thereof is 5 mm), and an angle between the target and the horizontal plane is 0° (a tolerance thereof is 0.2°).

The targets T11 and T15 may follow the same arrangement specifications, where a horizontal spacing between the targets is 5,450 mm (measured from the center of the target, and a tolerance thereof is 5 mm), a horizontal distance from the central axis of the vehicle to the center of the target is 2,745 mm (measured from the center of the target, and a tolerance thereof is 5 mm), a longitudinal distance from the target to the ground plane of the vehicle is 1,500 mm (measured from the center of the target, and a tolerance thereof is 5 mm), a horizontal distance from the front axle of the vehicle to the center of the target is 2,100 mm (measured along the central axis of the vehicle from the center of the target, and a tolerance thereof is 5 mm), and an angle between the target and the horizontal plane is 90° (a tolerance thereof is 0.2°).

The targets T12 to T16 may follow the same arrangement specifications, where a horizontal spacing between the targets is 5,450 mm (measured from the center of the target, and a tolerance thereof is 5 mm), a horizontal distance from the central axis of the vehicle to the center of the target is 2,745 mm (measured from the center of the target, and a tolerance thereof is 5 mm), a longitudinal distance from the target to the ground plane of the vehicle is 1,250 mm (measured from the center of the target, and a tolerance thereof is 5 mm), a horizontal distance from the front axle of the vehicle to the center of the target is -500 mm (measured along the central axis of the vehicle from the center of the target, and a tolerance thereof is 5 mm), and an angle between the target and the horizontal plane is 90° (a tolerance thereof is 0.2°).

The targets T13 and T17 may follow the same arrangement specifications, where a horizontal spacing between the targets is 5,450 mm (measured from the center of the target, and a tolerance thereof is 5 mm), a horizontal distance from the central axis of the vehicle to the center of the target is 2,745 mm (measured from the center of the target, and a tolerance thereof is 5 mm), a longitudinal distance from the target to the ground plane of the vehicle is 800 mm (measured from the center of the target, and a tolerance thereof is 5 mm), a horizontal distance from the front axle of the vehicle to the center of the target is -2,000 mm (measured along the central axis of the vehicle from the center of the target, and a tolerance thereof is 5 mm), and an angle between the target and the horizontal plane is 90° (a tolerance thereof is 0.2°).

The targets T14 and T18 may follow the same arrangement specifications, where a horizontal spacing between the targets is 5,450 mm (measured from the center of the target, and a tolerance thereof is 5 mm), a horizontal distance from the central axis of the vehicle to the center of the target is 2,725 mm (measured from the center of the target, and a tolerance thereof is 5 mm), a longitudinal distance from the target to the ground plane of the vehicle is 800 mm (measured from the center of the target, and a tolerance thereof is 5 mm), a horizontal distance from the front axle of the vehicle to the center of the target is -3,600 mm (measured along the central axis of the vehicle from the center of the target, and a tolerance thereof is 5 mm), and an angle between the target and the horizontal plane is 90° (a tolerance thereof is 0.2°).

In some embodiments of the disclosure, any one of first targets is located on a bisector of a field of view of the millimeter-wave radar of the vehicle. In addition, any one of second targets is located on a bisector of a field of view of the laser radar of the vehicle. For example, within the range of the calibration place, the target of the millimeter-wave radar may be arranged at a position as far as possible from the center of the field of view of the millimeter-wave radar within the range of the field of view, and the target of the laser radar may be arranged at a position as close as possible to the center of the field of view of the laser radar within the range of the field of view. A specific arrangement solution may be designed according to calibration requirements of the millimeter-wave radar and the laser radar, place restrictions, etc. Such arrangement may facilitate calibration of the millimeter-wave radar and the laser radar, thereby improving the calibration accuracy.

In some embodiments of the disclosure, any one of third targets is located in the center of a field of view of the image acquisition apparatus of the vehicle or an overlapping area of field of views of the image acquisition apparatus of the vehicle. For example, the target may be arranged in the overlapping area of the field of views of two cameras based on arrangement positions of the cameras and the field of views thereof. In addition, the target may also be arranged at positions such as in the center of the field of view, on the edge, etc. of the camera, so as to ensure that there are at least two targets in the field of view of each camera. It is better to arrange one target in the overlapping area of the field of views of every two cameras. Such arrangement may improve the calibration accuracy of the image acquisition apparatus.

According to the method 20 for joint calibration of sensors, the at least two types of targets are measured by using sensors in the vehicle to jointly calibrate the sensors in step S206. In some embodiments of the disclosure, jointly calibrating the sensors includes: determining positions of the at least two types of targets in a vehicle coordinate system based on positions of the at least two types of targets and the vehicle in a global coordinate system; and and determining positions of the sensors in the vehicle coordinate system based on measurement results of the sensors on the at least two types of targets. For example, during actual calibration, self-positioning of the vehicle is first implemented according to step S202, and the coordinate system (the vehicle coordinate system) with the center of the front axle of the vehicle as the origin of coordinates may be established. The vehicle positioning has been completed, that is, the absolute position of the vehicle in the geodetic coordinate system has been obtained. Since the positions of the targets in the same geodetic coordinate system set according to step S204 are also known, a positional relationship between the targets in the vehicle coordinate system may be determined. Then, different calibration methods may be adopted according to the characteristics of the sensors in step S206. For example, a self-calibration method may be adopted for the millimeter-wave radar and the laser radar, and the positions of the millimeter-wave radar and the laser radar in the vehicle coordinate system may be known based on the positions of the targets measured by the millimeter-wave radar and the laser radar. For the cameras, the positions of the targets may be visually detected, and the positions thereof in the vehicle coordinate system are obtained by estimating six degrees of freedom (6DoF) using a perspective-n-point (PnP) algorithm or other algorithms, thereby completing the calibration.

According to another aspect of the disclosure, a vehicle is provided. The vehicle includes at least two types of sensors calibrated by any one of the systems for joint calibration of sensors as described above or by using any one of the methods for joint calibration of sensors as described above. For example, before delivery of the vehicle, the sensors of the vehicle may be calibrated by any one of the systems for joint calibration of sensors as described above or any one of the methods for joint calibration of sensors as described above, so that efficient and accurate joint calibration of all delivered vehicles can be implemented.

According to another aspect of the disclosure, a non-transitory computer-readable medium is provided. The non-transitory computer-readable medium stores instructions for execution by a processor, the instructions, when executed by the processor causing the processor to perform any one of the methods for joint calibration of sensors as described above. The non-transitory computer-readable medium in the disclosure includes various types of computer storage media, and may be any usable medium accessible to a general-purpose or special-purpose computer. For example, the non-transitory computer-readable medium may include a random access memory (RAM), a read-only memory (ROM), an electrically programmable read-only memory (EPROM), an electrically erasable programmable read-only memory (E²PROM), a register, a hard disk, a removable disk, a compact disc read-only memory (CD-ROM) or another optical disc memory, a magnetic disk memory or another magnetic storage device, or any other transitory or non-transitory media that can carry or store expected program code units having instruction or data structure forms and be accessible to the general-purpose or special-purpose computer or a general-purpose or special-purpose processor. Data is usually copied magnetically in a disk used herein, while data is usually copied optically by using lasers in a disc. A combination of the above shall also fall within the scope of protection of the non-transitory computer-readable medium. For example, the storage medium is coupled to a processor, so that the processor can read information from and write information to the storage medium. In an alternative solution, the storage medium may be integrated into the processor. The processor and the storage medium may reside in an application-specific integrated circuit (ASIC). The ASIC may reside in a user terminal. In an alternative solution, the processor and the storage medium may reside as discrete assemblies in a user terminal.

In some of the above examples of the disclosure, field of views of multiple sensors such as those that may be used in the process of autonomous driving are analyzed and jointly optimized. In this process, appropriate calibration images and targets may be selected, and the accuracy of six-degree-of-freedom (6DoF) position and orientation estimation for sensors is improved by means of the corresponding PnP algorithm or other algorithms. In addition, in this process, the absolute position of the vehicle in the geodetic coordinate system may be first determined by combining active vehicle positioning with passive field end positioning in combination with the characteristics of a production line and the calibration place, thereby improving the accuracy of vehicle positioning. The accurate 6DoF positions of the sensors relative to the vehicle may be determined by combining the active vehicle positioning with the passive field end positioning, which lays a foundation for subsequent tasks such as fusion, positioning, etc. based on perception of the single sensor.

The above are merely the specific embodiments of the disclosure, but are not intended to limit the scope of protection of the disclosure. Any feasible variations or replacements conceived by those skilled in the art within the technical scope disclosed in the disclosure shall fall within the scope of protection of the disclosure. Without conflicts, the embodiments of the disclosure and features in the embodiments may also be combined with each another. The scope of protection of the disclosure shall be subject to recitations of the claims.

## Claims

1. A vehicle, comprising at least two types of sensors calibrated by a system for joint calibration of sensors, wherein the system for joint calibration of sensors comprising:
a vehicle positioning unit configured to guide a vehicle to a predetermined position; and
a target unit comprising at least two types of targets positioned relative to the predetermined position and configured for joint calibration of sensors in the vehicle that correspond to the at least two types of targets.

2. A method for joint calibration of sensors, preferably performed in a vehicle according to claim 1, the method comprising:
guiding a vehicle to a predetermined position;
positioning at least two types of targets relative to the predetermined position; and
measuring the at least two types of targets by using sensors in the vehicle that correspond to the at least two types of targets to jointly calibrate the sensors.

3. The method according to claim 2, wherein guiding the vehicle to a predetermined position by at least one of the following: a four-wheel positioning apparatus, a V-groove positioning apparatus, a limit guide rod positioning apparatus, and a laser radar positioning apparatus.

4. The method according to claim 2 or 3, wherein the at least two types of targets comprise at least two of the following: at least a first target configured for calibration of a millimeter-wave radar, at least a second target configured for calibration of a laser radar, and at least a third target configured for calibration of an image acquisition apparatus.

5. The method according to any one of claims 2 to 4, wherein the at least two types of targets are display targets capable of displaying variable patterns and/or fixed-style targets.

6. The method according to claim 4 or 5, wherein any one of first targets is located on a bisector of a field of view of the millimeter-wave radar of the vehicle, and any one of second targets is located on a bisector of a field of view of the laser radar of the vehicle.

7. The method according to claim 4, 5, or 6, wherein any one of third targets is located in the center of a field of view of the image acquisition apparatus of the vehicle or an overlapping area of field of views of the image acquisition apparatus of the vehicle.

8. The method according to any one of claims 2 to 7, wherein calibrating the sensors comprises:
determining positions of the at least two types of targets in a vehicle coordinate system based on positions of the at least two types of targets and the vehicle in a global coordinate system; and
determining positions of the sensors in the vehicle coordinate system based on measurement results of the sensors on the at least two types of targets.

9. A non-transitory computer-readable medium having instructions for execution by a processor, the instructions when executed by the processor causing the processor to perform a method for joint calibration of sensors, preferably the method of any one of claims 2 to 8, comprising
guiding a vehicle to a predetermined position;
positioning at least two types of targets relative to the predetermined position; and
measuring the at least two types of targets by using sensors in the vehicle that correspond to the at least two types of targets to jointly calibrate the sensors.

10. The non-transitory computer-readable medium according to claim 9, wherein guiding a vehicle to a predetermined position by at least one of the following: a four-wheel positioning apparatus, a V-groove positioning apparatus, a limit guide rod positioning apparatus, and a laser radar positioning apparatus.

11. The non-transitory computer-readable medium according to claim 9 or 10, wherein the at least two types of targets comprise at least two of the following: at least a first target configured for calibration of a millimeter-wave radar, at least a second target configured for calibration of a laser radar, and at least a third target configured for calibration of an image acquisition apparatus.

12. The non-transitory computer-readable medium according to any one of claims 9 to 11, wherein the at least two types of targets are display targets capable of displaying variable patterns and/or fixed-style targets.

13. The non-transitory computer-readable medium according to claim 11 or 12, wherein any one of first targets is located on a bisector of a field of view of the millimeter-wave radar of the vehicle, and any one of second targets is located on a bisector of a field of view of the laser radar of the vehicle.

14. The non-transitory computer-readable medium according to claim 11, 12, or 13, wherein any one of third targets is located in the center of a field of view of the image acquisition apparatus of the vehicle or an overlapping area of field of views of the image acquisition apparatus of the vehicle.

15. The non-transitory computer-readable medium according to any one of claims 9 to 15, wherein calibrating the sensors comprises:
determining positions of the at least two types of targets in a vehicle coordinate system based on positions of the at least two types of targets and the vehicle in a global coordinate system; and
determining positions of the sensors in the vehicle coordinate system based on measurement results of the sensors on the at least two types of targets.
